# EUROPÄISCHE PATENTSCHRIFT

(11) **EP 2 619 876 B1**
(45) Veröffentlichungstag und Bekanntmachung des Hinweises auf die Patenterteilung: **28.02.2018**
(21) Anmeldenummer: 11761307.5
(22) Anmeldetag: 31.08.2011
(51) Int. Cl.: H02J 7/00, B60L 11/18, H02P 27/14, H02J 7/14

(54) **VERFAHREN ZUM UMLADEN VON ENERGIE ZWISCHEN MINDESTENS ZWEI ENERGIESPEICHERZELLEN IN EINEM STEUERBAREN ENERGIESPEICHER**
METHOD FOR TRANSFERRING ENERGY BETWEEN AT LEAST TWO POWER CELLS IN A CONTROLLABLE ENERGY STORE
PROCÉDÉ DE TRANSFERT D'ÉNERGIE ENTRE AU MOINS DEUX ÉLÉMENTS D'UN ACCUMULATEUR D'ÉNERGIE CONTRÔLABLE

(30) Priorität: 20.09.2010 DE 102010041034
(43) Veröffentlichungstag der Anmeldung: 31.07.2013
(73) Patentinhaber: Robert Bosch GmbH, 70442 Stuttgart (DE)
(72) Erfinder: FEUERSTACK, Peter, 71642 Ludwigsburg (DE); WEISSENBORN, Erik, 70374 Stuttgart (DE); KESSLER, Martin, 73527 Schwaebisch Gmuend (DE)
(86) Internationale Anmeldenummer: PCT/EP2011/064971
(87) Internationale Veröffentlichungsnummer: WO 2012/038208

(56) Entgegenhaltungen:
- DE-A1-102008 043 593
- US-A1- 2004 135 545
- US-A1- 2009 171 521

## Beschreibung

Die Erfindung betrifft ein Verfahren zum Umladen von Energie zwischen mindestens zwei Energiespeicherzellen in einem steuerbaren Energiespeicher.

### Stand der Technik

Es zeichnet sich ab, dass in Zukunft sowohl bei stationären Anwendungen, wie z.B. Windkraftanlagen, wie auch in Fahrzeugen, wie Hybrid- oder Elektrofahrzeugen, vermehrt elektronische Systeme zum Einsatz kommen, die neue Energiespeichertechnologien mit elektrischer Antriebstechnik kombinieren. In herkömmlichen Anwendungen wird eine elektrische Maschine, welche z.B. als Drehfeldmaschine ausgeführt ist, über einen Umrichter in Form eines Wechselrichters gesteuert. Kennzeichnend für derartige Systeme ist ein sogenannter Gleichspannungszwischenkreis, über welchen ein Energiespeicher, in der Regel eine Batterie, an die Gleichspannungsseite des Wechselrichters angeschlossen ist. Um die für eine jeweilige Anwendung gegebenen Anforderungen an Leistung und Energie erfüllen zu können, werden mehrere Batteriezellen in Serie geschaltet. Da der von einem derartigen Energiespeicher bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen.

Die Serienschaltung mehrerer Batteriezellen bringt neben einer hohen Gesamtspannung das Problem mit sich, dass der gesamte Energiespeicher ausfällt, wenn eine einzige Batteriezelle ausfällt, weil dann kein Batteriestrom mehr fließen kann. Ein solcher Ausfall des Energiespeichers kann zu einem Ausfall des Gesamtsystems führen. Bei einem Fahrzeug kann ein Ausfall der Antriebsbatterie zum "Liegenbleiben" des Fahrzeugs führen. Bei anderen Anwendungen, wie z.B. der Rotorblattverstellung von Windkraftanlagen, kann es bei ungünstigen Rahmenbedingungen, wie z.B. starkem Wind, sogar zu sicherheitsgefährdenden Situationen kommen. Daher ist stets eine hohe Zuverlässigkeit des Energiespeichers anzustreben, wobei mit "Zuverlässigkeit" die Fähigkeit eines Systems bezeichnet wird, für eine vorgegebene Zeit fehlerfrei zu arbeiten.

In den älteren Anmeldungen DE 10 2010 027 857 A1 und DE 10 2010 027 861 A1 sind Batterien mit mehreren Batteriemodulsträngen beschrieben, welche direkt an eine elektrische Maschine anschließbar sind. Die Batteriemodulstränge weisen dabei eine Mehrzahl von in Serie geschalteten Batteriemodulen auf, wobei jedes Batteriemodul mindestens eine Batteriezelle und eine zugeordnete steuerbare Koppeleinheit aufweist, welche es erlaubt in Abhängigkeit von Steuersignalen den jeweiligen Batteriemodulstrang zu unterbrechen oder die jeweils zugeordnete mindestens eine Batteriezelle zu überbrücken oder die jeweils zugeordnete mindestens eine Batteriezelle in den jeweiligen Batteriemodulstrang zu schalten. Durch geeignete Ansteuerung der Koppeleinheiten, z.B. mit Hilfe von Pulsweitenmodulation, können auch geeignete Phasensignale zur Steuerung der elektrischen Maschine bereitgestellt werden, so dass auf einen separaten Pulswechselrichter verzichtet werden kann. Der zur Steuerung der elektrischen Maschine erforderliche Pulswechselrichter ist damit sozusagen in die Batterie integriert. Im Sinne des Wortlautes des Anspruchs 1 offenbart die DE 10 2010 027 861 A1 ein Verfahren in einem steuerbaren Energiespeicher (2), welcher der Steuerung und der elektrischen Energieversorgung einer n-phasigen elektrischen Maschine (1), mit n _{≥} 1, dient, wobei
- der steuerbare Energiespeicher (2) n parallele Energieversorgungszweige (3-1, 3-2, 3-3) aufweist, welche
- jeweils mindestens zwei in Reihe geschaltete Energiespeichermodule (4) aufweisen, welche jeweils mindestens eine elektrische Energiespeicherzelle (5) mit einer zugeordneten steuerbaren Koppeleinheit (6) umfassen,
- einerseits mit einer Bezugsschiene (T-) verbunden sind und
- andererseits mit jeweils einer Phase (U, V, W) der elektrischen Maschine (1) verbunden sind,
- in einer Ladephase elektrische Energie in den Statorwicklungen (8-U, 8-V, 8-W) der elektrischen Maschine (1) gespeichert wird, indem
- alle Koppeleinheiten (6-11) derjenigen Energiespeichermodule (4-11), welche als Energiequelle genutzt werden sollen, derart gesteuert werden, dass die jeweils zugeordneten Energiespeicherzellen (5-11) in den jeweiligen Energieversorgungszweig (3-1) geschaltet werden,
- alle Koppeleinheiten (6-12 bis 6-1 m), welche in dem Energieversorgungszweig (3-1) von Energiespeichermodulen (4) liegen, die als Energiequelle genutzt werden sollen, selbst aber Energiespeichermodulen (4) zugeordnet sind, die nicht als Energiequelle genutzt werden sollen, derart gesteuert werden, dass die jeweils zugeordneten Energiespeicherzellen (5-12 bis 5-1 m) durch ein Schaltelement der zugeordneten steuerbaren Koppeleinheit (6) isoliert werden und dieses Schaltelement in dem Energieversorgungszweig (3-1) überbrückt wird,
- alle übrigen Koppeleinheiten (6) derart gesteuert werden, dass die jeweiligen Energieversorgungszweige (3-2) unterbrochen werden, und
- in einer der Ladephase folgenden Freilaufphase der Strom in den Statorwicklungen (8-U, 8-V, 8-W) der elektrischen Maschine (1) weiter getrieben wird.
Die Druckschriften US 2009/0171521 A1, US 2004/0135545 A1 und DE 10 2008 043 539 A1 offenbaren jeweils Systeme zum Ladungsausgleich zwischen mehreren in Serie geschalteten Batterizellen.

### Offenbarung der Erfindung

Die vorliegende Erfindung löst die Aufgabe durch die Merkmale der unabhängigen Ansprüche. Vorteilhafte Weiterbildungen der Erfindung sind Gegenstand der Unteransprüche.

Hierbei wird ein Verfahren zum Umladen von Energie zwischen mindestens zwei Energiespeicherzellen in einem steuerbaren Energiespeicher, welcher der Steuerung und der elektrischen Energieversorgung einer n-phasigen elektrischen Maschine, mit n ≥ 1 dient, geschaffen. Dabei weist der steuerbare Energiespeicher n parallele Energieversorgungszweige auf, welche jeweils mindestens zwei in Reihe geschaltete Energiespeichermodule aufweisen, welche jeweils mindestens eine elektrische Energiespeicherzelle mit einer zugeordneten steuerbaren Koppeleinheit umfassen. Die Energieversorgungszweige sind einerseits mit einem Bezugspotential - im Folgenden als Bezugsschiene bezeichnet - und andererseits mit jeweils einer Phase der elektrischen Maschine verbunden. In Abhängigkeit von Steuersignalen unterbrechen die Koppeleinheiten entweder den jeweiligen Energieversorgungszweig oder die jeweils zugeordneten Energiespeicherzellen werden durch ein Schaltelement der zugeordneten steuerbaren Koppeleinheit isoliert und diese Schaltelement in dem Energieversorgungszweig überbrückt, oder die Koppeleinheitenschalten die jeweils zugeordneten Energiespeicherzellen in den jeweiligen Energieversorgungszweig. Um das Umladen von Energie von zumindest einer der Energiespeicherzellen auf zumindest eine andere Energiespeicherzelle zu ermöglichen, wird in einer Landephase elektrische Energie in den Statorwicklungen der elektrischen Maschine gespeichert, indem alle Koppeleinheiten derjenigen Energiespeichermodule, welche als Energiequelle genutzt werden sollen, derart gesteuert werden, dass die jeweils zugeordneten Energiespeicherzellen in den jeweiligen Energieversorgungszweig geschaltet werden. Alle Koppeleinheiten, welche in dem Energieversorgungszweig von Energiespeichermodulen liegen, die als Energiequelle genutzt werden sollen, selbst aber Energiespeichermodulen zugeordnet sind, die nicht als Energiequelle genutzt werden sollen, werden derart gesteuert, dass die jeweils zugeordneten Energiespeicherzellen durch ein Schaltelement der zugeordneten steuerbaren Koppeleinheit isoliert werden und dieses Schaltelement in dem Energieversorgungszweig überbrückt wird. Alle Koppeleinheiten welche in einem Energieversorgungszweig von zu ladenden Energiespeicherzellen liegen, werden derart gesteuert, dass die jeweils zugeordneten Energiespeicherzellen durch ein Schaltelement der zugeordneten steuerbaren Koppeleinheit isoliert werden und dieses Schaltelement in dem Energieversorgungszweig überbrückt wird, und alle übrigen Koppeleinheiten werden derart gesteuert, dass die jeweiligen Energieversorgungszweige unterbrochen werden. In einer der Ladephase folgenden Freilaufphase wird der Strom in den Statorwicklungen der elektrischen Maschine weiter getrieben wird und zu ladende Energiespeicherzellen aufgeladen, indem dann alle Koppeleinheiten, welche zu ladenden Energiespeicherzellen zugeordnet sind, derart gesteuert werden, dass die zugeordneten Energiespeicherzellen in den jeweiligen Energieversorgungszweig geschaltet werden. Alle Koppeleinheiten, welche in dem Energieversorgungszweig von zu ladenden Energiespeicherzellen liegen, selbst aber keinen zu ladenden Energiespeicherzellen zugeordnet sind, werden derart gesteuert, dass die jeweils zugeordneten Energiespeicherzellen durch ein Schaltelement der zugeordneten steuerbaren Koppeleinheit isoliert werden und dieses Schaltelement in dem Energieversorgungszweig überbrückt wird.

Alle Koppeleinheiten derjenigen Energiespeichermodule, welche als Energiequelle genutzt werden sollen, werden derart gesteuert, dass die jeweils zugeordneten Energiespeicherzellen in den jeweiligen Energieversorgungszweig geschaltet werden oder dass die jeweils zugeordneten Energiespeicherzellen durch ein Schaltelement der zugeordneten steuerbaren Koppeleinheit isoliert werden und dieses Schaltelement in dem Energieversorgungszweig überbrückt wird. Alle Koppeleinheiten, welche in dem Energieversorgungszweig von Energiespeichermodulen liegen, die als Energiequelle genutzt werden sollen, selbst aber Energiespeichermodulen zugeordnet sind, die nicht als Energiequelle genutzt werden sollen, werden derart gesteuert, dass die jeweils zugeordneten Energiespeicherzellen durch ein Schaltelement der zugeordneten steuerbaren Koppeleinheit isoliert werden und dieser Schalter in dem Energieversorgungszweig überbrückt wirdund alle übrigen Koppeleinheiten werden derart gesteuert, dass die jeweiligen Energieversorgungszweige unterbrochen werden.

### Vorteile der Erfindung

Die Erfindung basiert auf der Grundidee, die Koppeleinheiten einerseits und die Statorwicklungen der elektrischen Maschine andererseits zu nutzen, um eine Anpassung (Balancing) des Ladezustands zwischen einzelnen Energiespeichermodulen zu nutzen, so dass eine gewünschte Ladungsverteilung über die einzelnen Energiespeichermodule erzielbar ist. Dies wird dadurch realisiert, dass die Koppeleinheiten und die Statorwicklungen in einer Ladephase analog zu einem Hochsetzsteller betrieben werden, wobei den Statorwicklungen aus Energiespeichermodulen, welche als Energiequelle dienen sollen, Energie zugeführt und dort gespeichert wird, welche anschließend in einer Freilaufphase an die zu ladenden Energiespeicherzellen abgegeben wird. Dabei entsteht keinerlei zusätzlicher Hardware-Aufwand, so dass auch keine zusätzlichen Kosten oder zusätzlicher Platzbedarf anfallen.

Mit dem erfindungsgemäßen Verfahren ist sowohl die Ladung von Energiespeicherzellen eines einzelnen Energiespeichermoduls als auch die gleichzeitige Ladung von Energiespeicherzellen mehrerer Energiespeichermodule möglich. Auch als Energiequelle können die Energiespeicherzellen eines einzelnen Energiespeichermoduls oder auch die Energiespeicherzellen mehrerer Energiespeichermodule genutzt werden. Im Fall einer mehrphasigen elektrischen Maschine können auch die Energiespeicherzellen von Energiespeichermodulen, welche in verschiedenen Energieversorgungszweigen liegen, gleichzeitig als Energiequelle dienen oder auch gleichzeitig geladen werden.

Bei der Mitnutzung der Motorinduktivität der elektrischen Maschine, gilt es allerdings, den Aufbau unerwünschter Momente in der elektrischen Maschine während des Ladevorgangs zu vermeiden. Dies kann dadurch realisiert werden, dass die elektrische Maschine während des Ladevorgangs mechanisch blockiert wird, z.B. mit Hilfe einer Getriebesperrklinke. Alternativ kann auch die Rotorlage der elektrischen Maschine überwacht werden, z.B. mit Hilfe einer entsprechenden Sensorik, und im Falle einer detektierten Rotorbewegung abgeschaltet werden.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung einer elektrischen Maschine mit einer steuerbaren Energieversorgung in einer Ladephase und
- Fig. 2: eine schematische Darstellung der elektrischen Maschine mit der steuerbaren Energieversorgung gemäß Fig. 1 in einer Freilaufphase.

### Ausführungsformen der Erfindung

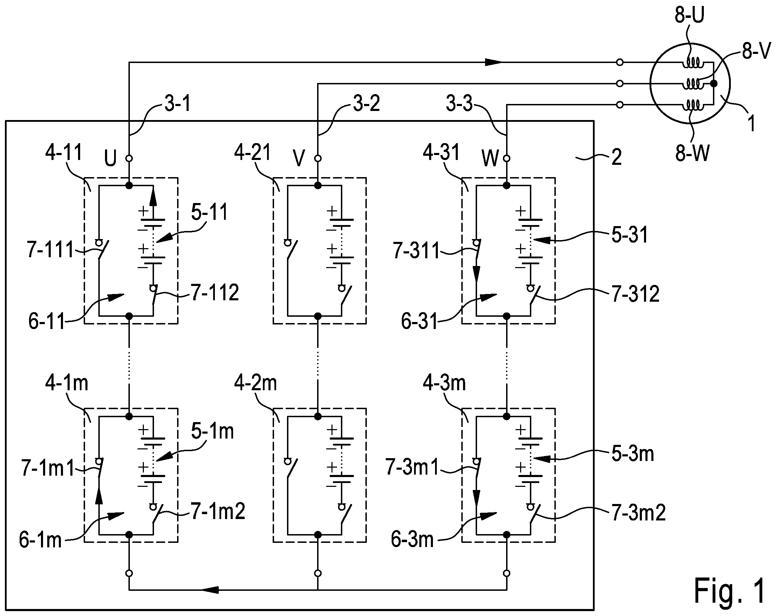

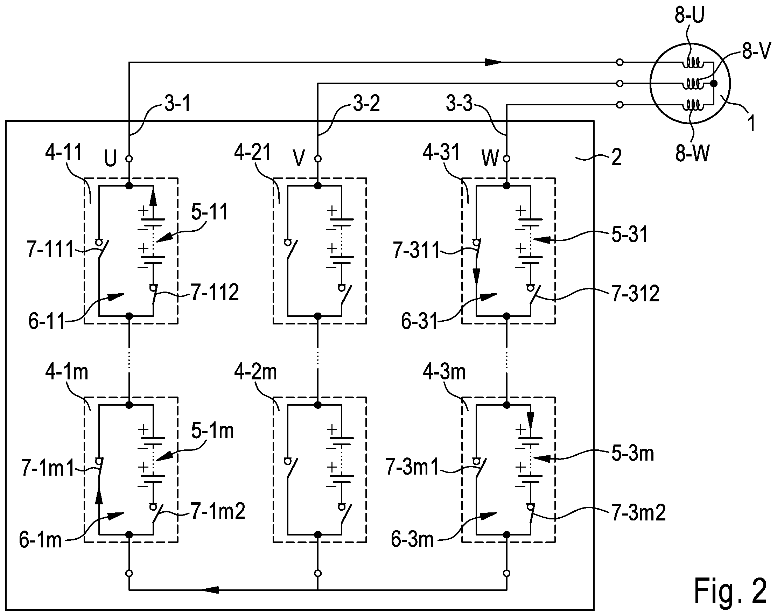

Die Figuren 1 und 2 zeigen eine schematische Darstellung eines erfindungsgemäßen Ladesystems. An eine dreiphasige elektrische Maschine 1 ist ein steuerbarer Energiespeicher 2 angeschlossen. Der steuerbare Energiespeicher 2 umfasst drei Energieversorgungszweige 3-1, 3-2 und 3-3, welche einerseits mit einem Bezugspotential T- (Bezugsschiene), welches in der dargestellten Ausführungsform ein niedriges Potential führt, und andererseits jeweils mit einzelnen Phasen U, V, W der elektrischen Maschine 1 verbunden sind. Jeder der Energieversorgungszweige 3-1, 3-2 und 3-3 weist m in Reihe geschaltete Energiespeichermodule 4-11 bis 4-1m bzw. 4-21 bis 4-2m bzw. 4-31 bis 4-3m auf, wobei m ≥ 2. Die Energiespeichermodule 4 wiederum umfassen jeweils mehrere in Reihe geschaltete elektrische Energiespeicherzellen, welche aus Gründen der Übersichtlichkeit lediglich in den mit den Phasen U und W der elektrischen Maschine 1 verbundenen Energieversorgungszweigen 3-1 bzw. 3-3 mit Bezugszeichen 5-11 bis 5-1m bzw. 5-31 bis 5-3m versehen sind. Die Energiespeichermodule 4 umfassen des Weiteren jeweils eine Koppeleinheit, welche den Energiespeicherzellen 5 des jeweiligen Energiespeichermoduls 4 zugeordnet ist. Aus Gründen der Übersichtlichkeit sind auch die Koppeleinheiten lediglich in den Energieversorgungszweigen 3-1 und 3-3 mit Bezugszeichen 6-11 bis 6-1m bzw. 6-31 bis 6-3m versehen. In der dargestellten Ausführungsvariante werden die Koppeleinheiten 6 jeweils durch zwei steuerbare Schaltelemente 7-111 und 7-112 bis 7-1m1 und 1-1m2 bzw. 7-311 und 7-312 bis 7-3m1 und 7-3m2 gebildet. Die Schaltelemente können dabei als Leistungshalbleiterschalter, z.B. in Form von IGBTs (Insulated Gate Bipolar Transistors) oder als MOSFETs (Metal Oxide Semiconductor Field-Effect Transistors), ausgeführt sein.

Die Koppeleinheiten 6 ermöglichen es, den jeweiligen Energieversorgungszweig 3, durch Öffnen beider Schaltelemente 7 einer Koppeleinheit 6 zu unterbrechen. Alternativ können die Energiespeicherzellen 5 durch Schließen jeweils eines der Schaltelemente 7 einer Koppeleinheit 6 entweder überbrückt werden, z.B. Schließen des Schalters 7-311 oder in den jeweiligen Energieversorgungszweig 3 geschaltet werden, z.B. Schließen des Schalters 7-312.

Die Gesamt-Ausgangsspannungen der Energieversorgungszweige 3-1 bis 3-3 werden bestimmt durch den jeweiligen Schaltzustand der steuerbaren Schaltelemente 7 der Koppeleinheiten 6 und können stufig eingestellt werden. Die Stufung ergibt sich dabei in Abhängigkeit von der Spannung der einzelnen Energiespeichermodule 4. Geht man von der bevorzugten Ausführungsform gleichartig ausgestalteter Energiespeichermodule 4 aus, so ergibt sich eine maximal mögliche Gesamt-Ausgangsspannung aus der Spannung eines einzelnen Energiespeichermoduls 4 mal der Anzahl m der pro Energieversorgungszweig in Reihe geschalteten Energiespeichermodule 4.

Die Koppeleinheiten 6 erlauben es damit, die Phasen U, V, W der elektrischen Maschine 1 entweder gegen ein hohes Bezugspotential oder ein niedriges Bezugspotential zu schalten und können insofern auch die Funktion eines bekannten Wechselrichters erfüllen. Damit können Leistung und Betriebsart der elektrischen Maschine 1 bei geeigneter Ansteuerung der Koppeleinheiten 6 durch den steuerbaren Energiespeicher 2 gesteuert werden. Der steuerbare Energiespeicher 2 erfüllt also insofern eine Doppelfunktion, da er einerseits der elektrischen Energieversorgung andererseits aber auch der Steuerung der elektrischen Maschine 1 dient.

Die elektrische Maschine 1 weist Statorwicklungen 8-U, 8-V und 8-W auf, die in bekannter Weise in Sternschaltung miteinander verschaltet sind.

Die elektrische Maschine 1 ist im dargestellten Ausführungsbeispiel als dreiphasige Drehstrommaschine ausgeführt, kann aber auch weniger oder mehr als drei Phasen aufweisen. Nach der Phasenanzahl der elektrischen Maschine richtet sich natürlich auch die Anzahl der Energieversorgungszweige 3 in dem steuerbaren Energiespeicher 2.

Im dargestellten Ausführungsbeispiel weist jedes Energiespeichermodul 4 jeweils mehrere in Reihe geschaltete Energiespeicherzellen 5 auf. Die Energiespeichermodule 4 können aber alternativ auch jeweils nur eine einzige Energiespeicherzelle oder auch parallel geschaltete Energiespeicherzellen aufweisen.

Im dargestellten Ausführungsbeispiel werden die Koppeleinheiten 6 jeweils durch zwei steuerbare Schaltelemente 7 gebildet. Die Koppeleinheiten 6 können aber auch durch mehr oder weniger steuerbare Schaltelemente realisiert sein, solange die notwendigen Funktionen (Unterbrechen des Energieversorgungszweiges, Überbrücken der Energiespeicherzellen und Schalten der Energiespeicherzellen in den Energieversorgungszweig) realisierbar sind. Beispielhafte alternative Ausgestaltungen einer Koppeleinheit ergeben sich aus den älteren Anmeldungen DE 10 2010 027857 und DE 10 2010 027861. Darüber hinaus ist es aber auch denkbar, dass die Koppeleinheiten Schaltelemente in Vollbrückenschaltung aufweisen, was die zusätzliche Möglichkeit einer Spannungsumkehr am Ausgang des Energiespeichermoduls bietet.

Im Folgenden wird exemplarisch der Ladevorgang der Energiespeicherzellen 5 eines einzelnen Energiespeichermoduls 4, nämlich der Energiespeicherzellen 5-31m des Energiespeichermoduls 4-3m in dem Energieversorgungszweig 3-3 beschrieben. Dabei sollen auch nur die Energiespeicherzellen 5 eines einzelnen Energiespeichermoduls 4, nämlich die Energiespeicherzellen 5-11 des Energiespeichermoduls 4-11 in dem Energieversorgungszweig 3-1 als Energiequelle genutzt werden.

Während einer Ladephase, welche in Fig. 1 dargestellt ist, wird die Koppeleinheit 6-11 des Energiespeichermoduls 4-11, welches als Energiequelle genutzt werden soll, durch eine nicht dargestellte Steuereinheit derart gesteuert, dass die jeweils zugeordnete Energiespeicherzellen 5-11 in den Energieversorgungszweig 3-1 geschaltet wird. Dies wird konkret dadurch erreicht, dass das Schaltelement 7-112 geschlossen wird, wohingegen das Schaltelement 7-111 geöffnet wird. Alle übrigen Koppeleinheiten 6-12 bis 6-1m in dem Energieversorgungszweig 3-1 werden derart gesteuert, dass die jeweils zugeordneten Energiespeicherzellen 5-12 bis 5-1m überbrückt werden. Dies wird konkret dadurch erreicht, dass die Schaltelemente 7-121 bis 7-1m1 geschlossen werden, wohingegen die Schaltelemente 7-122 bis 7-1 m2 geöffnet werden. Die Koppeleinheiten 6-31 bis 6-3m der Energiespeichermodule 4-31 bis 4-3m, welche in dem Energieversorgungszweig 3-3 liegen, in welchem auch die zu ladenden Energiespeicherzellen 5-3m liegen, werden durch eine nicht dargestellte Steuereinheit derart gesteuert, dass die jeweils zugeordneten Energiespeicherzellen 5-31 bis 5-3m überbrückt werden. Dies wird konkret dadurch erreicht, dass die Schaltelemente 7-311 bis 7-3m1 geschlossen werden, wohingegen die Schaltelemente 7-312 bis 7-3m2 geöffnet werden. Alle übrigen Koppeleinheiten, das heißt alle Koppeleinheiten 6 in den Energiespeichermodulen 4 des Energieversorgungszweiges 3-2 werden derart gesteuert, dass der Energieversorgungszweig 3-2 unterbrochen wird. Konkret wird dies dadurch erreicht, dass jeweils beide Schaltelemente 7 der Koppeleinheiten 6 geöffnet werden.

Eine derartige Ansteuerung der Koppeleinheiten 6 bewirkt einen Stromfluss durch die Statorwicklungen 8-U und 8-W, so dass während der Ladephase elektrische Energie in den Statorwicklungen 8-U und 8-W gespeichert wird.

In einer der Ladephase folgenden Freilaufphase, welche in Fig. 2 dargestellt ist, wird die Koppeleinheit 6-3m, welche den zu ladenden Energiespeicherzellen 5-3m zugeordnet ist, derart gesteuert, dass die zugeordneten Energiespeicherzellen 5-3m in den Energieversorgungszweig 3-3 geschaltet werden. Dies wird konkret dadurch erreicht, dass das Schaltelemente 7-3m2 geschlossen und das Schaltelement 7-3m1 geöffnet wird. Alle übrigen Koppeleinheiten 6-31 bis 6-3(m-1), welche in dem Energieversorgungszweig 3-3 der zu ladenden Energiespeicherzellen 5-3m liegen, die selbst aber keinen zu ladenden Energiespeicherzellen 5 zugeordnet sind, werden derart gesteuert, dass die jeweils zugeordneten Energiespeicherzellen 5-31 bis 5-3(m-1) überbrückt werden (Schließen der Schaltelemente 7-311 bis 7-3(m-1)1 und Öffnen der Schaltelemente 7-312 bis 7-3(m-1)2). Die Koppeleinheit 6-11 des Energiespeichermoduls 4-11, welches als Energiequelle genutzt wird, kann wie dargestellt derart gesteuert werden, dass die zugeordneten Energiespeicherzellen 5-11 weiterhin in den Energieversorgungszweig 3-1 geschaltet sind. Dies hat den Vorteil, dass die Energiespeicherzellen 5-11 unmittelbar zur Ladung der Energiespeicherzelle 5-3m beitragen. Alternativ dazu kann die Koppeleinheit 6-11 des Energiespeichermoduls 4-11 in der Freilaufphase aber auch derart gesteuert werden, dass die zugeordneten Energiespeicherzellen 5-11 überbrückt werden. In diesem Fall erfolgt die Ladung der zu ladenden Energiespeicherzelle 5-3m ausschließlich aus den Induktivitäten der Statorwicklungen 8-U und 8-W. Alle übrigen Koppeleinheiten 6-12 bis 6-1m in dem Energieversorgungszweig 3-1 des als Energiequelle genutzten Energiespeichermoduls 4-11 werden derart gesteuert, dass die jeweils zugeordneten Energiespeicherzellen 5-12 bis 5-1m überbrückt werden. Alle übrigen Koppeleinheiten 6, das heißt alle Koppeleinheiten 6 in den Energiespeichermodulen 4 des Energieversorgungszweiges 3-2 werden derart gesteuert, dass der Energieversorgungszweig 3-2 unterbrochen wird.

Eine derartige Steuerung der Koppeleinheiten 6 bewirkt eine elektrische Verbindung der Statorwicklungen 8-U und 8-W mit den zu ladenden Energiespeicherzellen 5-3m. Die Induktivität der Statorwicklungen 8-U und 8-W treibt dabei den Strom weiter und lädt auf diese Weise die Energiespeicherzellen 5-3m auf. Sind, wie in Figur 2 dargestellt, in der Freilaufphase auch die als Energiequelle dienenden Energiespeicherzellen 5 noch in den jeweiligen Energieversorgungszweig 3 geschaltet, so tragen auch diese unmittelbar zur Ladung der zu ladenden Energiespeicherzellen 5 bei.

Um die Erzeugung unerwünschter Momente in der elektrischen Maschine während des Umladevorgangs zu vermeiden, kann die elektrische Maschine 1 während des Ladevorgangs mechanisch blockiert werden, z.B. mit Hilfe einer Getriebesperrklinke. Alternativ kann auch die Rotorlage der elektrischen Maschine 1 überwacht werden, z.B. mit Hilfe einer entsprechenden Sensorik, und im Falle einer detektierten Rotorbewegung abgeschaltet werden.

## Patentansprüche

1. Verfahren zum Umladen von Energie zwischen mindestens zwei Energiespeicherzellen (5) in einem steuerbaren Energiespeicher (2), welcher der Steuerung und der elektrischen Energieversorgung einer n-phasigen elektrischen Maschine (1), mit n ≥ 1, dient, wobei
- der steuerbare Energiespeicher (2) n parallele Energieversorgungszweige (3-1, 3-2, 3-3) aufweist, welche
▪ jeweils mindestens zwei in Reihe geschaltete Energiespeichermodule (4) aufweisen, welche jeweils mindestens eine elektrische Energiespeicherzelle (5) mit einer zugeordneten steuerbaren Koppeleinheit (6) umfassen,
▪ einerseits mit einer Bezugsschiene (T-) verbunden sind und
▪ andererseits mit jeweils einer Phase (U, V, W) der elektrischen Maschine (1) verbunden sind,
- die Koppeleinheiten (6) in Abhängigkeit von Steuersignalen durch Öffnen eines ersten Schaltelements (7-111 bis 7-3m1) der zugeordneten steuerbaren Koppeleinheit (6-11 bis 6-3m) und Öffnen eines zweiten Schaltelement (7-112 bis 7-3m2) der zugeordneten steuerbaren Koppeleinheit (6-11 bis 6-3m) den jeweiligen Energieversorgungszweig (3-1, 3-2; 3-3) unterbrechen oder die jeweils zugeordneten Energiespeicherzellen (5) durch Öffnen des zweiten Schaltelements (7-112 bis 7-3m2) der zugeordneten steuerbaren Koppeleinheit (6-11 bis 6-3m) abkoppeln und dieses zweite Schaltelement (7-112 bis 7-3m2) sowie die zugeordneten Energiespeicherzellen in dem jeweiligen Energieversorgungszweig (3-1, 3-2, 3-3) durch Schließen des ersten Schaltelements (7-111 bis 7-3m1) überbrückt werden, oder die Koppeleinheiten (6) durch Öffnen des ersten Schaltelements (7-111 bis 7-3m1) der zugeordneten steuerbaren Koppeleinheit (6-11 bis 6-3m) und Schließen des zweiten Schaltelements (7-112 bis 7-3m2) der zugeordneten steuerbaren Koppeleinheit (6-11 bis 6-3m) die jeweils zugeordneten Energiespeicherzellen (5) in den jeweiligen Energieversorgungszweig (3-1, 3-2; 3-3) schalten,
bei dem
- in einer Ladephase elektrische Energie in den Statorwicklungen (8-U, 8-V, 8-W) der elektrischen Maschine (1) gespeichert wird, indem
▪ alle Koppeleinheiten (6-11) derjenigen Energiespeichermodule (4-11), welche als Energiequelle genutzt werden sollen, derart gesteuert werden, dass die jeweils zugeordneten Energiespeicherzellen (5-11) in den jeweiligen Energieversorgungszweig (3-1) geschaltet werden,
▪ alle Koppeleinheiten (6-12 bis 6-1m), welche in dem Energieversorgungszweig (3-1) von Energiespeichermodulen (4) liegen, die als Energiequelle genutzt werden sollen, selbst aber Energiespeichermodulen (4) zugeordnet sind, die nicht als Energiequelle genutzt werden sollen, derart gesteuert werden, dass die jeweils zugeordneten Energiespeicherzellen (5-12 bis 5-1m) durch ein Schaltelement (7-112 bis 7-1m2) der zugeordneten steuerbaren Koppeleinheit (6) isoliert werden und dieses Schaltelement in dem Energieversorgungszweig (3-1) überbrückt wird,
▪ alle Koppeleinheiten (6-31 bis 6-3m), welche in einem Energieversorgungszweig (3-3) von zu ladenden Energiespeicherzellen (5-3m) liegen, derart gesteuert werden, dass die jeweils zugeordneten Energiespeicherzellen (5-31 bis 5-3m) durch ein Schaltelement (7-312 bis 7-3m2) der zugeordneten steuerbaren Koppeleinheit (6-31 bis 6-3m) isoliert werden und dieses Schaltelement in dem Energieversorgungszweig (3-3) überbrückt wird, und
▪ alle übrigen Koppeleinheiten (6) derart gesteuert werden, dass die jeweiligen Energieversorgungszweige (3-2) unterbrochen werden, und
- in einer der Ladephase folgenden Freilaufphase der Strom in den Statorwicklungen (8-U, 8-V, 8-W) der elektrischen Maschine (1) weiter getrieben wird und zu ladende Energiespeicherzellen (5-3) auflädt, indem
▪ alle Koppeleinheiten (6-3m), welche zu ladenden Energiespeicherzellen (5-3m) zugeordnet sind, derart gesteuert werden, dass die zugeordneten Energiespeicherzellen (5-3m) in den jeweiligen Energieversorgungszweig (3-3) geschaltet werden,
▪ alle Koppeleinheiten (6-31 bis 6-3(m-1)), welche in dem Energieversorgungszweig (3-3) von zu ladenden Energiespeicherzellen (5-3m) liegen, selbst aber keinen zu ladenden Energiespeicherzellen (5) zugeordnet sind, derart gesteuert werden, dass die jeweils zugeordneten Energiespeicherzellen (5-31 bis 5-3(m-1)) durch ein Schaltelement (7-312 bis 7-3(m-1)2) der zugeordneten steuerbaren Koppeleinheit (6-31 bis 6-3(m-1)) isoliert werden und dieses Schaltelement in dem Energieversorgungszweig (3-3) überbrückt wird,
▪ alle Koppeleinheiten (6-11) derjenigen Energiespeichermodule (4-11), welche als Energiequelle genutzt werden sollen, derart gesteuert werden, dass die jeweils zugeordneten Energiespeicherzellen (5-11) in den jeweiligen Energieversorgungszweig (3-1) geschaltet werden oder dass die jeweils zugeordneten Energiespeicherzellen (5-11) durch ein Schaltelement (7-112) der zugeordneten steuerbaren Koppeleinheit (6-11) isoliert werden und dieses Schaltelement in dem Energieversorgungszweig (3-1) überbrückt wird,
▪ alle Koppeleinheiten (6-12 bis 6-1m), welche in dem Energieversorgungszweig (3-1) von Energiespeichermodulen (4) liegen, die als Energiequelle genutzt werden sollen, selbst aber Energiespeichermodulen (4) zugeordnet sind, die nicht als Energiequelle genutzt werden sollen, derart gesteuert werden, dass die jeweils zugeordneten Energiespeicherzellen (5-12 bis 5-1m) durch ein Schaltelement (7-312 bis 7-3m2) der zugeordneten steuerbaren Koppeleinheit (6-12 bis 6-1m) isoliert werden und dieses Schaltelement in dem Energieversorgungszweig (3-1) überbrückt wird,
▪ alle übrigen Koppeleinheiten (6) derart gesteuert werden, dass die jeweiligen Energieversorgungszweige (3-2) unterbrochen werden.

2. Verfahren nach Anspruch 1, wobei die elektrische Maschine (1) während des Umladevorgangs mechanisch blockiert wird.

## Claims

1. Method for redistributing energy between at least two energy storage cells (5) in a controllable energy store (2) which serves to control and to supply electrical energy to an n-phase electrical machine (1), where n ≥ 1, wherein
- the controllable energy store (2) has n parallel energy supply branches (3-1, 3-2, 3-3) which
• each have at least two energy storage modules (4) which are connected in series and which each comprise at least one electrical energy storage cell (5) with an associated controllable coupling unit (6),
• are connected to a reference rail (T-) at one end and
• are connected to in each case one phase (U, V, W) of the electrical machine (1) at the other end,
- the coupling units (6) interrupt the respective energy supply branch (3-1, 3-2; 3-3) depending on control signals by opening a first switching element (7-111 to 7-3m1) of the associated controllable coupling unit (6-11 to 6-3m) and opening a second switching element (7-112 to 7-3m2) of the associated controllable coupling unit (6-11 to 6-3m) or decouple the respectively associated energy storage cells (5) by opening the second switching element (7-112 to 7-3m2) of the associated controllable coupling unit (6-11 to 6-3m) and this second switching element (7-112 to 7-3m2) and also the associated energy storage cells in the respective energy supply branch (3-1, 3-2, 3-3) being bridged by closing the first switching element (7-111 to 7-3m1), or the coupling units (6) connect the respectively associated energy storage cells (5) into the respective energy supply branch (3-1, 3-2; 3-3) by opening the first switching element (7-111 to 7-3m1) of the associated controllable coupling unit (6-11 to 6-3m) and closing the second switching element (7-112 to 7-3m2) of the associated controllable coupling unit (6-11 to 6-3m),
in which,
- in a charging phase, electrical energy is stored in the stator windings (8-U, 8-V, 8-W) of the electrical machine (1) by
• all of the coupling units (6-11) of those energy storage modules (4-11) which are intended to be used as an energy source being controlled in such a way that the respectively associated energy storage cells (5-11) are connected into the respective energy supply branch (3-1),
• all of the coupling units (6-12 to 6-1m) which are situated in the energy supply branch (3-1) of energy storage modules (4) which are intended to be used as an energy source but themselves are associated with energy storage modules (4) which are not intended to be used as an energy source being controlled in such a way that the respectively associated energy storage cells (5-12 to 5-1m) are isolated by a switching element (7-112 to 7-1m2) of the associated controllable coupling unit (6) and this switching element is bridged in the energy supply branch (3-1),
• all of the coupling units (6-31 to 6-3m) which are situated in an energy supply branch (3-3) of energy storage cells (5-3m) to be charged being controlled in such a way that the respectively associated energy storage cells (5-31 to 5-3m) are isolated by a switching element (7-312 to 7-3m2) of the associated controllable coupling unit (6-31 to 6-3m) and this switching element is bridged in the energy supply branch (3-3), and
• all of the other coupling units (6) being controlled in such a way that the respective energy supply branches (3-2) are interrupted, and,
- in a freewheeling phase which follows the charging phase, the current in the stator windings (8-U, 8-V, 8-W) of the electrical machine (1) is further driven and charges energy storage cells (5-3) to be charged by
• all of the coupling units (6-3m) which are associated with energy storage cells (5-3m) to be charged being controlled in such a way that the associated energy storage cells (5-3m) are connected into the respective energy supply branch (3-3),
• all of the coupling units (6-31 to 6-3(m-1)) which are situated in the energy supply branch (3-3) of energy storage cells (5-3m) to be charged but themselves are not associated with any energy storage cells (5) to be charged being controlled in such a way that the respectively associated energy storage cells (5-31 to 5-3(m-1)) are isolated by a switching element (7-312 to 7-3(m-1)2) of the associated controllable coupling unit (6-31 to 6-3(m-1)) and this switching element is bridged in the energy supply branch (3-3),
• all of the coupling units (6-11) of those energy storage modules (4-11) which are intended to be used as an energy source being controlled in such a way that the respectively associated energy storage cells (5-11) are connected into the respective energy supply branch (3-1) or that the respectively associated energy storage cells (5-11) are isolated by a switching element (7-112) of the associated controllable coupling unit (6-11) and this switching element is bridged in the energy supply branch (3-1),
• all of the coupling units (6-12 to 6-1m) which are situated in the energy supply branch (3-1) of energy storage modules (4) which are intended to be used as an energy source but themselves are associated with energy storage modules (4) which are not intended to be used as an energy source being controlled in such a way that the respectively associated energy storage cells (5-12 to 5-1m) are isolated by a switching element (7-312 to 7-3m2) of the associated controllable coupling unit (6-12 to 6-1m) and this switching element is bridged in the energy supply branch (3-1),
• all of the other coupling units (6) being controlled in such a way that the respective energy supply branches (3-2) are interrupted.

2. Method according to Claim 1, wherein the electrical machine (1) is mechanically blocked during the redistribution process

## Revendications

1. Procédé de transfert d'énergie entre au moins deux cellules d'accumulation d'énergie (5) dans un accumulateur d'énergie (2) commandable, lequel sert à la commande et à l'alimentation en énergie d'une machine électrique (1) à n phases, avec n ≥ 1,
- l'accumulateur d'énergie (2) commandable possédant n branches d'alimentation en énergie (3-1, 3-2, 3-3) en parallèle, lesquelles
* possèdent respectivement au moins deux modules d'accumulation d'énergie (4) branchés en série, qui comprennent respectivement au moins une cellule d'accumulation d'énergie (5) électrique avec une unité de couplage (6) commandable associée,
* sont reliées d'un côté à une barre-bus de référence (T-) et
* sont reliées de l'autre côté respectivement à une phase (U, V, W) de la machine électrique (1),
- les unités de couplage (6) interrompant la branche d'alimentation en énergie (3-1, 3-2, 3-3) correspondante en fonction de signaux de commande par l'ouverture d'un premier élément de commutation (7-111 à 7-3m1) de l'unité de couplage (6-11 à 6-3m) commandable associée et par l'ouverture d'un deuxième élément de commutation (7-112 à 7-3m2) de l'unité de couplage (6-11 à 6-3m) commandable associée ou désaccouplant les cellules d'accumulation d'énergie (5) respectivement associées par l'ouverture du deuxième élément de commutation (7-112 à 7-3m2) de l'unité de couplage (6-11 à 6-3m) commandable associée et ce deuxième élément de commutation (7-112 à 7-3m2) ainsi que les cellules d'accumulation d'énergie associées dans la branche d'alimentation en énergie (3-1, 3-2, 3-3) correspondante étant court-circuités par la fermeture du premier élément de commutation (7-111 à 7-3m1), ou les unités de couplage (6) commutant les cellules d'accumulation d'énergie (5) respectivement associées dans la branche d'alimentation en énergie (3-1, 3-2, 3-3) correspondante par l'ouverture du premier élément de commutation (7-111 à 7-3m1) de l'unité de couplage (6-11 à 6-3m) commandable associée et par la fermeture du deuxième élément de commutation (7-112 à 7-3m2) de l'unité de couplage (6-11 à 6-3m) commandable associée,
procédé selon lequel
- dans une phase de charge, de l'énergie électrique est accumulée dans les enroulements statoriques (8-U, 8-V, 8-W) de la machine électrique (1), en ce que
* toutes les unités de couplage (6-11) des modules d'accumulation en énergie (4-11) qui doivent être utilisés comme source d'énergie sont commandées de telle sorte que les cellules d'accumulation d'énergie (5-11) respectivement associées sont commutées dans la branche d'alimentation en énergie (3-1) correspondante,
* toutes les unités de couplage (6-12 à 6-1m) qui se trouvent dans la branche d'alimentation en énergie (3-1) des modules d'accumulation en énergie (4) qui doivent être utilisés comme source d'énergie, mais qui sont elles-mêmes associées à des modules d'accumulation en énergie (4) qui ne doivent pas être utilisés comme source d'énergie, sont commandées de telle sorte que les cellules d'accumulation d'énergie (5-12 à 5-1m) respectivement associées sont isolées par un élément de commutation (7-112 à 7-1m2) de l'unité de couplage (6) commandable associée et cet élément de commutation est court-circuité dans la branche d'alimentation en énergie (3-1),
* toutes les unités de couplage (6-31 à 6-3m) qui se trouvent dans une branche d'alimentation en énergie (3-3) de cellules d'accumulation d'énergie (5-3m) à charger sont commandées de telle sorte que les cellules d'accumulation d'énergie (5-31 à 5-3m) respectivement associées sont isolées par un élément de commutation (7-312 à 7-3m2) de l'unité de couplage (6-31 à 6-3m) commandable associée et cet élément de commutation est court-circuité dans la branche d'alimentation en énergie (3-3), et
* toutes les unités de couplage (6) restantes sont commandées de telle sorte que les branches d'alimentation en énergie (3-2) correspondantes sont interrompues, et
- dans une phase de roue libre qui suit la phase de charge, le courant dans les enroulements statoriques (8-U, 8-V, 8-W) de la machine électrique (1) est de nouveau mis en service et charge les cellules d'accumulation d'énergie (5-3) à charger, en ce que
* toutes les unités de couplage (6-3m) qui sont associées à des cellules d'accumulation d'énergie (5) à charger sont commandées de telle sorte que les cellules d'accumulation d'énergie (5-3m) associées sont commutées dans la branche d'alimentation en énergie (3-3) correspondante,
* toutes les unités de couplage (6-31 à 6-3(m-1)) qui se trouvent dans la branche d'alimentation en énergie (3-3) de cellules d'accumulation d'énergie (5-3m) à charger, mais qui ne sont pas elles-mêmes associées à des cellules d'accumulation d'énergie (5) à charger, sont commandées de telle sorte que les cellules d'accumulation d'énergie (5-31 à 5-3(m-1)) respectivement associées sont isolées par un élément de commutation (7-312 à 7-3(m-1)2) de l'unité de couplage (6-31 à 6-3(m-1)) commandable associée, et cet élément de commutation est court-circuité dans la branche d'alimentation en énergie (3-3),
* toutes les unités de couplage (6-11) des modules d'alimentation en énergie (4-11) qui doivent servir de source d'énergie sont commandées de telle sorte que les cellules d'accumulation d'énergie (5-11) respectivement associées sont commutées dans la branche d'alimentation en énergie (3-1) correspondante ou que les cellules d'accumulation d'énergie (5-11) respectivement associées sont isolées par un élément de commutation (7-112) de l'unité de couplage (6-11) commandable associée et cet élément de commutation est court-circuité dans la branche d'alimentation en énergie (3-1),
* toutes les unités de couplage (6-12 à 6-1m) qui se trouvent dans la branche d'alimentation en énergie (3-1) de modules d'alimentation en énergie (4) qui doivent servir de source d'énergie, mais qui sont elles-mêmes associées à des modules d'alimentation en énergie (4) qui ne doivent pas servir de source d'énergie, sont commandées de telle sorte que les cellules d'accumulation d'énergie (5-12 à 5-1m) respectivement associées sont isolées par un élément de commutation (7-312 à 7-3m2) de l'unité de couplage (6-12 à 6-1m) commandable associée et cet élément de commutation est court-circuité dans la branche d'alimentation en énergie (3-1),
* toutes les unités de couplage (6) restantes sont commandées de telle sorte que les branches d'alimentation en énergie (3-2) correspondantes sont interrompues.

2. Procédé selon la revendication 1, la machine électrique (1) étant bloquée mécaniquement pendant le processus de transfert de charge.
